# EUROPÄISCHE PATENTSCHRIFT

(11) **EP 0 794 107 B1**
(45) Veröffentlichungstag und Bekanntmachung des Hinweises auf die Patenterteilung: **24.10.2001**
(21) Anmeldenummer: 97103620.7
(22) Anmeldetag: 05.03.1997
(51) Int. Cl.: B62D 27/04

(54) **Befestigung von Kunststoffteilen am Chassis eines Kraftfahrzeuges**
Mounting of plastic parts on the chassis of a motor vehicle
Fixation de pièces plastiques sur le châssis d'un véhicule à moteur

(30) Priorität: 06.03.1996 DE 19608548
(43) Veröffentlichungstag der Anmeldung: 10.09.1997
(73) Patentinhaber: DYNAMIT NOBEL KUNSTSTOFF GmbH, 53840 Troisdorf (DE)
(72) Erfinder: Hohenberger, Ernst, 91781 Weissenburg (DE)

(56) Entgegenhaltungen:
- EP-A- 0 012 940
- DE-C- 531 454
- DE-U- 7 107 748

## Beschreibung

Die Erfindung betrifft eine Befestigung von Kunststoffteilen am Chassis eines Kraftfahrzeugs, wobei am Chassis ein Führungselement befestigt ist, auf dem das Kunststoffteil in der Symmetrieachse des Führungselements beweglich gelagert ist und das Kunststoffteil über Dämpfungs- bzw. Federelemente gelagert ist.

Bei der Befestigung von Kunststoffteilen, wie Motorhauben oder Kotflügel am Chassis eines Kraftfahrzeugs, ist auf absolute Bündigkeit zu achten. Durch Wärmeausdehnung der Kunststoffteile entstehen leicht ungerade Fugen, die sehr häßlich wirken.

Aus der gattungsgemäßen DE 531 454 C ist eine Befestigung von Kunststoffteilen am Chassis eines Kraftfahrzeugs bekannt, wobei am Chassis ein Führungselement befestigt ist, auf dem das Kunststoffteil in der Symmetrieachse des Führungselements beweglich gelagert ist und das Kunststoffteil über Dämpfungs-bzw. Federelemente gelagert ist.

Aus dem DE 71 07 748 U ist ein Halter für Innenauskleidungen in Räumen von Land-, Wasser- oder Luftfahrzeugen oder Erschütterungen ausgesetzten Gebäuden, insbesondere zum Halten von Vorsatzplatten für Wände oder Fußböden, bekannt. Der Halter besteht aus einem an der Wand, Decke oder Fußboden befestigten Gummikörper an dem die Vorsatzplatten befestigt sind.

Der Erfindung liegt die Aufgabe zugrunde, eine Befestigung von Kunststoffteilen am Chassis eines Kraftfahrzeugs gemäß dem Oberbegriff des Anspruchs 1 zu schaffen, die Wärmeausdehnungen der Kunststoffteile ausgleicht.

Erfindungsgemäß wird diese Aufgabe dadurch gelöst, daß es sich bei den Kunststoffteilen um sichtbare Außenhautteile eines Kraftfahrzeugs handelt und das Dämpfungs- bzw. Federelement im Querschnitt wellenförmig geformt ist.

Die bewegliche Lagerung über ein Dämpfungs- bzw. Federelement gleicht Wärmeausdehnungen der Kunststoffteile aus, so daß keine häßlichen ungeraden Flächen entstehen.

Vorteilhafterweise umgreift das Kunststoffteil das Führungsteil und ist auf diesem rutschend gelagert. Durch das Umgreifen ergibt sich automatisch eine Führung und eine Beweglichkeit nur in Achsialrichtung des Führungsteils.

In bevorzugter Ausführungsform ist das Führungselement im Querschnitt U-förmig geformt und bildet somit eine Art Zapfen.

Das Dämpfungs- bzw. Federelement ist in einer bevorzugten Ausführungsform einerseits am Kunststoffteil und andererseits am Führungselement befestigt.

Erfindungsgemäß ist das Dämpfungs- bzw. Federelement im Querschnitt wellenförmig geformt. Durch den Winkel und die Bogenweite läßt sich die Dämpfungskennlinie des Dämpfungselements festlegen.

Weitere Merkmale der Erfindung ergeben sich aus der Beschreibung und den Figuren, die nachfolgend beschrieben werden.

Es zeigt:
- Figur 1: eine Ausführungsform der Befestigung, bei der ein am Kunststoffteil befestigtes Dämpfungs- bzw. Federelement am Führungselement festgelegt ist und
- Figur 2: eine alternative Befestigung, bei der das Dämpfungs- bzw. Federelement das Führungselement umgreift.

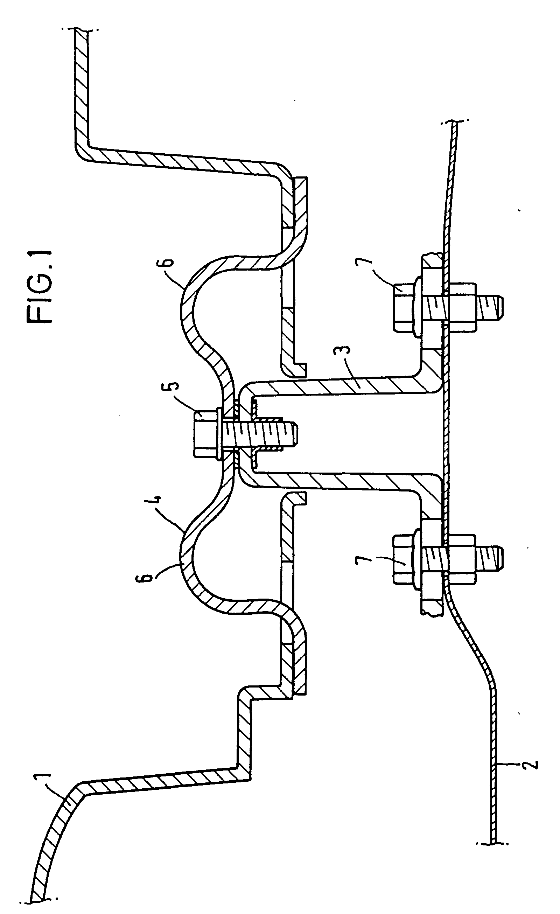

Figur 1 zeigt mit dem Bezugszeichen 2 eine Zugstrebe als Chassis eines Kraftfahrzeugs. An diesem Chassis 2 ist ein Kunststoffteil 1 über die erfindungsgemäße Befestigung festgelegt. Das Kunststoffteil 1 ist hier nur im Ausschnitt gezeigt und ist ein Frontmittelteil einer Motorhaube.

Zur Befestigung ist am Chassis 2 ein Führungselement 3 mittels Schrauben 7 angeschraubt, welches einen U-förmigen Querschnitt aufweist. Es bildet somit eine Art Zapfen. Im Kunststoffteil 1 ist eine entsprechende Öffnung angeordnet, durch die das Führungselement 3 ragt. Das Kunststoffteil 1 umgreift demnach das Führungselement 3 und ist daher in einer Achse, nämlich in der Längsachse des Führungselements 3 beweglich gelagert. Es kann auch vorteilhaft sein, das Führungselement konisch auszubilden. Die das Führungselement 3 umgreifende Öffnung ist an Ihrem Rand umgebogen, so daß sich eine größere Auflagefläche ergibt.

Ferner ist am Kunststoffteil 1 ein Dämpfungs- bzw. Federelement 4 befestigt, z.B. geklebt. Dieses Dämpfungs- bzw. Federelement 4 ist wellenförmig geformt und mit der Stirnseite des Führungselements 3 über eine Schraube 5 verschraubt. Beidseits der Schraube 5 ist jeweils ein Bogen 6 angeordnet. Über den Winkel und die Bogenweite läßt sich die Dämpfungskennlinie festlegen.

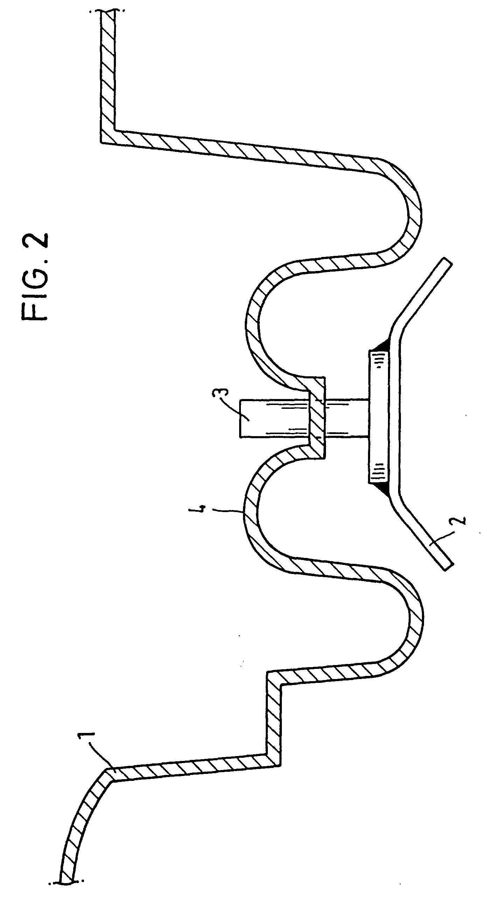

**Figur 2** zeigt eine alternative Ausführungsform mit einem Chassis 2 an dem ein Führungselement 3 angeschweißt ist. Das Kunststoffteil 1 ist in seinem das Führungselement 3 umgreifenden Teil als Dämpfungs- bzw. Federelement 4 ausgebildet. Beiderseits des Führungselements 3 ist das Dämpfungs- bzw. Federelement 4 sinusförmig geformt, so daß sich über das Führungselement 3 eine Führung in der Längsachse des Führungselements 3 ergibt und über das Dämpfungs- bzw. Federelement 4 eine Dämpfung erreicht ist. Über die Ausbildung des Winkels und der Bogenweite läßt sich wieder die Dämpfungskennlinie festlegen.

## Patentansprüche

1. Befestigung von Kunststoffteilen (1) am Chassis (2) eines Kraftfahrzeugs, wobei am Chassis (2) ein Führungselement (3) befestigt ist, auf dem das Kunststoffteil (1) in der Symmetrieachse des Führungselements (3) beweglich gelagert ist und das Kunststoffteil (1) über Dämpfungs- bzw. Federelemente (4) gelagert ist, **dadurch gekennzeichnet, daß** es sich bei den Kunststoffteilen (1) um sichtbare Außenhautteile eines Kraftfahrzeugs handelt und das Dämpfungs- bzw. Federelement (4) im Querschnitt wellenförmig geformt ist.

2. Befestigung nach Anspruch 1, **dadurch gekennzeichnet, daß** das Kunststoffteil (1) das Führungselement (3) umgreift und auf diesem rutschend gelagert ist.

3. Befestigung nach Anspruch 1 oder 2, **dadurch gekennzeichnet, daß** das Führungselement (3) im Querschnitt U-förmig geformt ist.

4. Befestigung nach einem der Ansprüche 1 bis 3, **dadurch gekennzeichnet, daß** das Dämpfungs- bzw. Federelement (4) einerseits am Kunststoffteil (1) und andererseits am Führungselement (3) befestigt ist.

## Claims

1. Fastening of plastics parts (1) to the chassis (2) of a motor vehicle, wherein a guide element (3), is fastened to the chassis (2) on which guide element the plastics part (1) is mounted in a manner such that it is movable in the axis of symmetry of the guide element (3), and the plastics part (1) is mounted by way of damping or spring elements, **characterised in that** the plastics parts (1) are visible exterior panelling portions of a motor vehicle and the damping or spring element (4) is formed so as to be wave-shaped in cross-section.

2. Fastening according to claim 1, **characterised in that** the plastics part (1) grips around the guide element (3) and is mounted thereon in a sliding manner.

3. Fastening according to claim 1 or 2, **characterised in that** the guide element (3) is formed so as to be U-shaped in cross-section.

4. Fastening according to one of claims 1 to 3, **characterised in that** the damping or spring element (4) is fastened to the plastics portion (1) on the one hand and to the guide element (3) on the other hand.

## Revendications

1. Fixation d'éléments (1) en matière plastique sur le châssis (2) d'un véhicule, une pièce de guidage (3) sur laquelle l'élément (1) en matière plastique est monté avec possibilité de déplacement sur l'axe de symétrie de ladite pièce de guidage(3) étant fixée au châssis (2), et l'élément (1) en matière plastique étant monté sur des éléments amortisseurs ou élastiques (4), **caractérisé en ce qu'**il s'agit, pour ce qi est des éléments (1) en matière plastique, d'éléments visibles de l'enveloppe extérieure d'un véhicule et **en ce que** l'élément amortisseur ou élastique (4), en section transversale, a une conformation ondulée.

2. Fixation selon la revendication 1, **caractérisé en ce que** l'élément (1) en matière plastique entoure la pièce de guidage (3) et est monté à glissement sur celle-ci.

3. Fixation selon la revendication 1 ou 2, **caractérisé en ce que** la pièce de guidage (3) présente une section transversale en forme de U.

4. Fixation selon une des revendications 1 à 3, **caractérisé en ce que** l'élément amortisseur ou élastique (4) est fixé d'un côté à l'élément (1) en matière plastique et de l'autre à la pièce de guidage (3).
